# EUROPEAN PATENT APPLICATION

(11) **EP 2 279 987 A1**
(43) Date of publication of application: **02.02.2011**
(21) Application number: 10171081.2
(22) Date of filing: 28.07.2010
(51) Int. Cl.: C04B 28/02

(54) **High mechanical performance cement mixture with fibres**

(30) Priority: 30.07.2009 IT MI20091376
(71) Applicant: C.I.C. Compagnia Italiana Costruzioni S.p.A., 20137 Milano (IT)
(72) Inventor: Da Rios, Giovanni, 20145 MILANO (IT); Crispino, Maurizio, 20145 MILANO (IT); Toraldo, Emanuele, 20025 LEGNANO (MILANO) (IT); Mariani, Edoardo, 20035 LISSONE (MILANO) (IT); Sordi, Luigi Emilio Achille, 20137 MILANO (IT)
(74) Representative: Petruzziello, Aldo

(57) **Abstract**

A cement mixture for foundation, sub-base and base layers consisting of a mixture comprising cement, water, lithic aggregates and fibres coming from at least a (co)polymer suitable to produce fibres, and use thereof in pavements of road and airport infrastructures and as sub-ballast layer in railway infrastructures.
The fibres are fed to the mixing chamber via an adduction line with compressed air in order to distangle the fibrils. The concrete layer is compacted by means of a vibratory paver and a roller compactor.

## Description

The present invention relates to a cement mixture containing polymer fibres with a high mechanical performance, in particular with a high indirect tensile strength, and its use as bearing layer (foundation, base or sub-base layer) of pavements for road, railway and airport infrastructures.

In the field of civil infrastructures, the use of fibres is known as an additive for asphalt concretes in order to absorb and retain the bitumen and/or to increase the mechanical performance, for example stiffness and fatigue and rutting resistance.

Also known to the art is the use of fibres as reinforcement in cement concrete used as surface layers in roads to prevent or contrast mainly the tension and consequent cracking due to the phenomenon of plastic shrinkage of cement, also finding use in such materials in place of metal nets as well as decreasing fragility and increasing traffic resistance.

However, the use of cement mixtures with fibres is not described in the art.

Actually, the cement mixtures known to the art are a mixture consisting of cement, water and lithic aggregates, generally coming from quarries and with a specific particle-size distribution. The layers made of cement mixture have a high bearing capacity, so they do not require the use of reinforcing materials or metal nets. For this reason cement mixtures are used to form the base, sub-base or rigid foundation layers on which laying the further layers, such as asphalt concrete for semi-rigid pavements, or cement concrete slabs for rigid pavements.

Said cement mixes are also known as possessing good compression strength, whilst they have a low indirect tensile strength. Indirect tensile strength is an indication of the crack behaviour of the material and can be evaluated through measurements of indirect tensile strength as defined in UNI EN 13286-42. Indirect traction in cement mixtures of the prior art is normally in the range of 0.15-0.35 MPa.

A low indirect tensile strength is essentially indicative of a material having a predisposition to fracture if constantly subjected to load cycles, as in the case, for example, of high-traffic roads with a high number of vehicles, and/or to high dynamic stress due to vibration.

Therefore, it is desirable for the cement mixture to have a greater indirect tensile strength in order to increase the infrastructures life-cycle.

Object of the present invention is to eliminate the drawbacks of the prior art by providing a cement mixture for foundation, sub-base or base layer for road and airport pavements or as railway sub-ballast, able to provide a high bearing capacity and stiffness, comparable to (or greater than) with cement mixtures of the prior art, but able to give a better mechanical response to indirect tension, to provide a high performance in terms of dynamic load strength (load cycles), absorption of vibrations deriving from vehicles in transit and distribution of stresses.

A further object of the present invention is to provide such a cement mixture that can be produced with the use of alternative ecological materials capable of providing the same performance as quarried stone materials without requiring excessive handling.

These objects are achieved according to the invention with the characteristics listed in appended independent claim 1.

Advantageous embodiments of the invention are apparent from the dependent claims.

The cement mixture of the present invention consists of a mixture comprising cement, water and lithic aggregates and is **characterized in that** it further comprises polymer fibres coming from at least a (co)polymer suitable to produce fibres.

Cement is generally present in amounts between 4% and 10% with respect to the total weight of the anhydrous aggregates, corresponding to a content of 90-230 kg/m³ of finished material (after laying and compacting).

In practice the amount of cement in the cement mixture of the present invention is normally less than that required to obtain a cement concrete, especially for structural purposes, (at least 7% up to 17% by weight, corresponding to 160-400 kg/m³) or a "rolled compacted concrete", whereas it is greater if compared with that of ordinary cement mixtures which is normally between 1.5% and 3.5%.

The cement used is a cement normally employed in producing cement mixtures. Examples that can be cited are II-B/M cement or II-B/L cement according to UNI EN 197-1, both with a strength class of 32,5R.

Water is initially present in amounts between 6% and 10% by weight with respect to the weight of the anhydrous aggregates, corresponding to a content of 140-230 kg/m³.

This amount is generally sufficient to achieve setting and hardening of the cement as well as making the mixture sufficiently workable. It should be noted that these amounts are greater than those used to obtain a cement concrete (3.5-7% by weight corresponding to 80-160 kg/m³) or a "rolled compacted concrete".

The content of cement and water is chosen so as to have a water/cement ratio preferably between 0.75-1. It should be noted that this water/cement ratio in a conventional cement concrete is generally between 0.3 and 0.5.

The aggregates normally derive from lithic quarries, with a suitable maximum size of the elements and particle-size distribution. Alternatively they can be obtained by crushing and selecting recycled materials deriving from civil demolitions, such as cement and/or asphalt concretes, or coming from industrial waste, classified as non hazardous, provided that they comply with specifications for qualification of aggregates known to a person skilled in the art (e.g. angularity, resistance to impact and abrasion, hardness and particle size).

The aggregates are preferably 0/40 mm class with a particle-size distribution selected according to the end use of the cement mixture and such as to ensure the continuity of the stony fraction. These sizes are greater than those normally used for a cement concrete or for a "rolled compacted concrete".

Furthermore these aggregates are not divided into particle-size classes unlike the aggregates used in cement concrete (normally divided into gravel, fine gravel, crushed stone, sand), and have no added fine aggregates such as ashes, fillers, sand and the like present in cement concrete and in "rolled compacted concrete".

An example of particle-size distribution is shown in the following table.

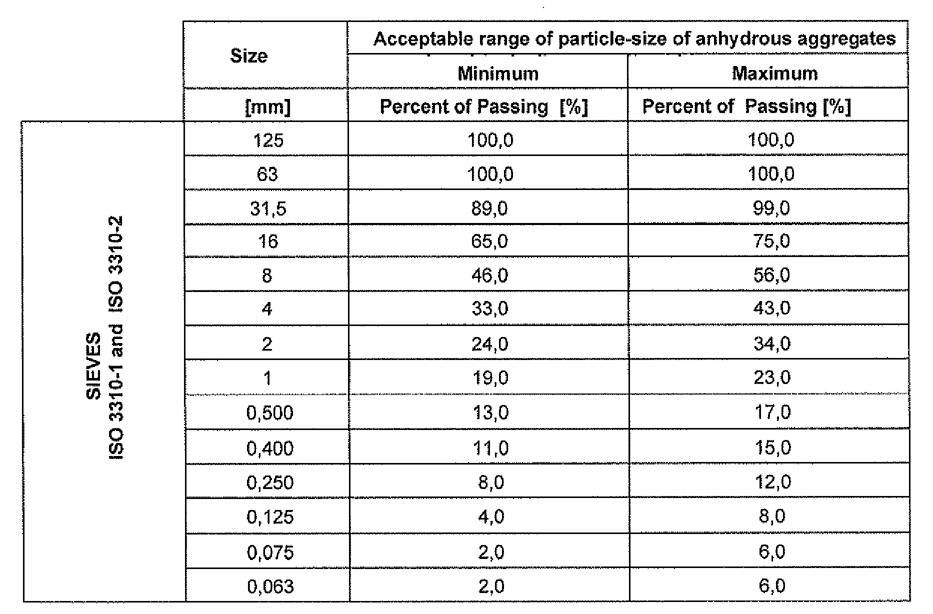

In the cement mixture of the present invention it is also possible to use inert quarried aggregates mixed with recycled aggregates as defined above.

The cement mixture of the present invention is prepared, taking the weight of anhydrous aggregates as 100, by adding 4-10% by weight of cement, 6-10% of water, and added fibres as specified below.

A (co)polymer suitable to produce polymer fibres is a polymer whose chains can appear as completely elongated (or almost completely elongated) and aligned one next to the other, on the same axis, and which can be spun. Some polymers that can be formed as fibres are polyethylene, polypropylene, nylon, polyester, polyacrylnitrile, cellulose, polyurethane, Kevlar and Nomex. It is also possible to use mixtures of different polymer or copolymer fibres obtained from the mixture of a plurality of polymers and/or copolymers.

The polymer of the fibres is preferably chosen among polypropylene, polyacrylonitrile, polyester, Kevlar and Nomex.

The fibres are preferably in fibrillated form.

In a preferred embodiment of the present invention, the fibres are of polypropylene and are produced by fibrillation, that permits a "mesh" effect. This allows the indirect tensile strength, stiffness and durability of the cement mixture to be improved with respect to known mixtures not containing polymer fibres.

The use of polymer fibres is particularly advantageous in cement mixtures for airport and railway applications; actually said fibres are not magnetic and are therefore compatible both with the instrumentation of the infrastructures and of the aircraft in the airport setting, and with the vehicles and the electrical power supply in the railway setting.

Other examples of fibres that can be used are continuous filament fibres, even if the "mesh" effect provided by fibrillated fibres is lost with these fibres.

Polymer fibres are used in amounts between 0.01% e 0.2%, preferably between 0.02% and 0.10%, by weight with respect to the total weight of the cement mixture without fibres. With the latter a fibre dosage ranging between 0.5 and 2 kg/m³ of finished material (after laying and compacting) is obtained.

The length of the polymer fibres is preferably between 0.5 and 2 times the maximum diameter of the aggregates, more preferably a length between 15 mm and 25 mm.

The polymer fibres preferably have a low specific weight, generally less than 1.1 g/cm³, more preferably between 0.8 e 1 g/cm³: this makes it possible to have a high number of fibres per unit of weight and thus the formation of an homogeneous network in the final mixture.

The surface of the polymer fibres used can be smooth or corrugated.

The mixture of the present invention, comprising cement, water, aggregates and polymer fibres, is prepared by mixing the above mentioned elements, in the amounts previously indicated, in an ordinary concrete mixing plant, with a simple adduction line with compressed air to feed the fibres is added; and subsequently applying and laying the cement mixture with fibres over the finished surface of the previous layer according to the normal methods known to a person skilled in the art, for example by means of a paver and a roller compactor.

In a preferred embodiment the laying stage is followed by a subsequent de-stress procedure during hardening of the cement. This de-stress procedure is carried out with metal rollers in static mode 24 hours after the end of the laying operations. The de-stress procedure allows the formation of micro-cracks suitable to absorb the tensions produced by the typical effects of shrinkage of cement when used in predominant amounts.

After laying, the cement mixture of the present invention presents sufficient stiffness, a high indirect tensile strength and having the following characteristics:
- elastic modulus between 5000 MPa and 20000 MPa, measured according to UNI EN 13286-43:2006 on samples prepared in a laboratory, after curing in a climatic chamber for 7 days;
- elastic modulus between 1000 MPa and 10000 MPa, measured in the field, after 7 days of curing, with a FWD (Falling Weight Deflectometer) apparatus having a force of impact of 80 kN, a load plate with a diameter of 30 em and measurement of deflection with 9 geophones for an acquisition length of 2 m;
- indirect tensile strength between 0.40 and 1 MPa measured according to UNI EN 13286-42 on samples reconstructed in a laboratory, after curing in a climatic chamber for 7 days;
- compression strength between 4.0 and 10 MPa measured according to UNI EN 13286-41 on samples reconstructed in a laboratory, after curing in a climatic chamber for 7 days.

As pointed out previously, these elastic moduli (measured both in the laboratory and on site) of the cement mixture of the present invention are comparable to (or greater than) those of cement mixtures without fibres.

It should be noted that in cement concrete the above mentioned mechanical characteristics (laboratory elastic modulus, on site elastic modulus, indirect tensile strength, compression strength) are different and the relative tests are subject to different standards in that the two materials are used for different purposes.

For example, a standard cement concrete shows the following characteristics:
- elastic modulus (secant modulus) on samples reconstructed in the laboratory between 15000 MPa and 30000 MPa, measured according to UNI EN 6656;
- elastic modulus between 20000 MPa and 30000 MPa, measured on site, after 7 days of curing, with a FWD (Falling Weight Deflectometer) apparatus having a force of impact of 80 kN, a load plate with a diameter of 30 cm and measurement of deflection with 9 geophones for an acquisition length of 2 m.
- indirect tensile strength greater than 3 MPa measured according to ASTM C486
- compression strength greater than 20 MPa measured according to UNI EN 12390.

It was unexpected that the use of polymer fibres would make it possible to obtain a better mechanical performance, particularly improved indirect tensile strength, in cement mixtures because in the art fibres are used for other purposes and in other materials, for example as functional or structural additives in cement or asphalt concretes.

Without wishing to be tied to any theory, it is supposed that the effect of the polymer fibres inside the cement mixture is that of connecting and binding to each other the lithic aggregates, thus allowing the transmission of stresses between adjacent stony elements and hence the distribution of stresses inside the cement mixture, in this way increasing indirect tensile strength, stiffness, durability, life-cicle, fatigue resistance and vehicle vibration absorption. This is also true if recycled aggregates are used. In practice, it can be presumed that a synergistic interaction exists between the components of the cement mixture of the present invention such as to impart improved physical-mechanical characteristics which make it particularly suitable to support high static and dynamic stresses.

In view of its improved mechanical properties, the cement mixture with added polymer fibres of the present invention can be used to replace cement mixtures of the prior art in the construction of bearing layers such as the base, sub-base or foundation layer in the construction of multi-layer pavements of road, railway and airport infrastructures, generally subjected to high load stresses and to dynamic loads, which thus require high performances in terms of absorption of vibrations, indirect tensile strength and distribution of stresses.

In particular the cement mixture with fibres of the present invention can be used as:
- foundation or sub-base layer for cement concrete rigid pavements,
- foundation or sub-base layer for semi-rigid asphalt concrete pavements,
- base layer in place of the standard asphalt concrete base layers present in semi-rigid pavements.

Furthermore, given the increasing development of high-speed railway lines characterised by high dynamic and vibrational stresses, the cement mixture with fibres of the present invention can be used as an alternative to bituminous conglomerates for railway sub-ballasts.

It should be noted that the cement mixture of the present invention is not suitable to be used as the surface layer, because it presents various drawbacks. Among these the main ones are:
- irregular surface conformation;
- low resistance to direct traffic stresses;
- high moisture sensitivity due to its high permeability.

The thickness of the layer of cement mixture with fibres is variable and is chosen by the expert in the field during the design according to the requirements of the application and the loads to which it will be subjected. This thickness is preferably 15 cm or less (up to 10 cm) if the material is used to form a single layer and up to 40 cm if it is employed to form a compacted layer in two or more superimposed layers.

One of the advantages of the cement mixture of the present invention is that of showing typical (or better than) stiffness and bearing capacity of cement mixtures without fibres, in combination with high and improved performances in terms of absorption of vibrations, dynamic strength and distribution of stresses, as well as an improved mechanical response to indirect tensile resistance.

Other advantages are economical and environmental, deriving from the use of recycled aggregates, for example coming from demolition structures and/or infrastructures made of cement or asphalt (possibly containing fibres in their turn) concretes at the end of their life-cycle, also combined.

From what is described, it is evident that the cement mixture with fibres of the present invention is of great interest for road, railway and airport managing agencies, construction companies, designers, manufacturers of civil works materials and waste disposal companies.

Without departing from the scope of the invention, a person skilled in the art can make to the cement mixture comprising polymer fibres previously described all the modifications and improvements suggested by normal experience and/or by the natural evolution of the art.

## Claims

1. A cement mixture able to form foundation, sub-base and base layers having improved indirect tensile strength consisting of a mixture comprising cement, water, lithic aggregates, **characterized in that** it further comprises polymeric fibres coming from at least a (co)polymer suitable to produce fibres, in amounts ranging from 0,01% and 0,20% by weight with respect to the total weight of the cement mixture without fibres; the amounts of cement are between 4% and 10% by weight with respect to the weight of anhydrous aggregates, and the water/cement ratio is between 0.75-1.

2. The cement mixture according to claim 1 wherein the polymeric fibres are in amounts ranging from 0,02% and 0,10% by weight with respect to the total weight of the mixture without fibres.

3. The cement mixture according to claim 1 or 2 wherein the polymeric fibres have a length ranging from 0.5 to 2 times the maximum diameter of the aggregates, preferably a length ranging from 15 mm to 25 mm.

4. The cement mixture according to any one of the preceding claims wherein the polymeric fibres have a specific weight lower than 1.1 g/cm³, preferably between 0.8 and 1 g/cm³.

5. The cement mixture according to any one of the preceding claims wherein the fibre polymer is selected from the group consisting of polypropylene, polyacrylonitrile, polyester or mixture thereof, preferably polypropylene, more preferably polypropylene fibres in fibrillated form.

6. The cement mixture according to any one of the preceding claims wherein water is in the initial mixture in amounts between 6% and 10% by weight with respect to the total weight of the anhydrous aggregates.

7. The cement mixture according to any one of the preceding claims wherein the lithic aggregates are 0/40 mm class, optionally coming from crushed and selected recycled materials.

8. Process for preparing the rolled compacted concrete as defined by any one of the preceding claims 1-7 comprising :
- mixing water, cement, stony aggregates and fibres in a concrete mixing plant having an adduction line with compressed air to feed the fibres;
- applying onsite and laying in the form of layer the previously obtained cement mixture by means of a paver and a roller compactor;
- optional de-stress procedure during the cement curing by means of metal roller in static mode, 24 hours after the end of the previous laying stage.

9. Pavements for road and airport infrastructures comprising, as base layer or foundation layer or sub-base layer, the cement mixture as defined by any one of the preceding claims 1-7.

10. Sub-ballast layers of railway infrastructures comprising the cement mixture as defined by any one of the preceding claims 1-7.
